# EUROPEAN PATENT SPECIFICATION

(11) **EP 2 936 306 B1**
(45) Date of publication and mention of the grant of the patent: **13.11.2019**
(21) Application number: 13866099.8
(22) Date of filing: 23.12.2013
(51) Int. Cl.: H04L 29/08, G06F 3/0484, G06F 9/445, G06F 8/60, G06F 16/13, G06F 17/24, G06F 21/57, H04L 29/06, G06F 21/51, H04W 4/50, H04W 4/60

(54) **GENERATING A CUSTOMIZED APPLICATION**
ERZEUGUNG EINER PERSONALISIERTEN ANWENDUNG
GÉNÉRATION D'UNE APPLICATION PERSONNALISÉE

(30) Priority: 21.12.2012 FI 20126361
(43) Date of publication of application: 28.10.2015
(73) Proprietor: Intellipocket Oy, 00180 Helsinki (FI)
(72) Inventor: REHTIJÄRVI, Pekka, FI-00180 Helsinki (FI)
(74) Representative: Papula Oy
(86) International application number: PCT/FI2013/051198
(87) International publication number: WO 2014/096553

(56) References cited:
- WO-A1-2012/151286
- US-A1- 2005 187 873
- US-A1- 2010 070 566
- US-A1- 2010 325 202
- US-A1- 2012 240 065
- US-B1- 8 261 231
- ARTAIL, H. A.: 'A client-based customization framework for web applications using JNLP'.' COMPUTER STANDARDS & INTERFACES vol. 26, no. 5, September 2004, pages 411 - 422, XP004505833

## Description

### FIELD OF THE INVENTION

The present invention relates generally to information technology and more particularly to customizing software applications whose customization is restricted by a set of boundary conditions.

### BACKGROUND OF THE INVENTION

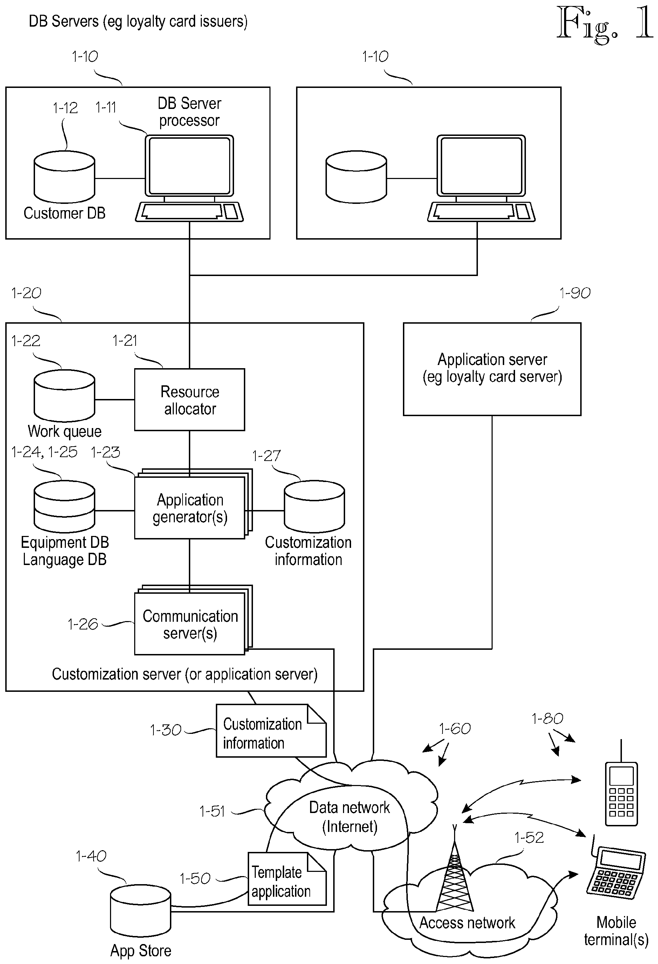

Commonly-owned PCT application WO2012/080578 discloses techniques for providing customized web applications to a mobile terminal. An illustrative but non-restrictive example of a customized application is a loyalty card. Figure 1 shows an exemplary system and network architecture from said WO2012/080578 application. The four major subsections of Figure 1 are a set of database servers 1-10, an application server, generally denoted by reference numeral 1-20, a telecommunication network (signalling system) 1-60 and a number of user terminals (mobile terminals), generally denoted by reference numeral 1-80. As shown in Figure 1, the mobile terminals 1-80 differ from one another in respect of various properties, including the resolution of their displays.

In the exemplary implementation shown in Figure 1, each database server 1-10 comprises a database server processor 1-11 and a database 1-12, such as a customer database that stores data relating to customer-specific loyalty cards. For the purposes of the present discussion it suffices that the database servers 1-10 are capable of requesting the customized application, such as a loyalty card, from the application server 1-20. The customer-specific parameters required for the delivery of the loyalty card can be provided in the request message sent to the application server 1-20. Alternatively, the database server 1-10 may provide such customer-specific parameters in a response to a separate customer parameter inquiry from the application server 1-20.

As shown in Figure 1, the application server 1-20 comprises a resource allocator 1-21 and a work queue 1-22 for distributing processing resources among several application requests from the one or more database servers 1-10. The processing resources are represented by application generators 1-23, which may be implemented as appropriately programmed data processors. The required programming will be apparent in connection with the following description. For adapting the requested applications, such as loyalty cards, to the properties of the various mobile terminals 1-80, the application server 1-20 comprises an equipment database 1-24. Alternatively or additionally, the application server 1-20 may be operatively coupled to an external equipment database (not shown separately). By consulting an optional language database 1-25, the application server may be able to prepare customized applications in several human languages. One or more communication servers 1-26 serve to distribute the generated applications among the mobile terminals 1-80 via the telecommunication networks 1-60.

In a typical network architecture, the telecommunication networks 1 50 comprise a data network 1-51, which typically is the internet, and an access network 1-52, which typically is a cellular mobile network, a wired or wireless local-area network, or the like. Details of the telecommunication networks 1-51, 1-52, such as intervening network elements, are omitted for the sake of clarity, as such elements represent conventional technology. Alternatively or additionally, a mobile terminal 1-80 may be coupled to a personal computer (not shown) via a short-range connection, such as an infrared or Bluetooth connection, wherein the personal computer is connected to the application server 1-20 via the internet 1-51. Finally, reference numeral 1-90 denotes a representative server to be contacted on activation of the customized application in the mobile terminal. In the exemplary case of the loyalty card, the server 1-90 is the server via which the terminal users may obtain status information concerning their loyalty card accounts.

As regards system architecture, Figure 1 shows a rather complex, scalable implementation which is capable of supporting a large number of mobile terminals and issuers of loyalty cards (or other kinds of database servers). For less demanding environments, the architecture can be implemented in a less ambitious manner. For example, there may be only one application generator 1-23 and only one communication server 1-25, and in environments which do not require multiple instances of these elements, the resource allocator 1-21 may be omitted as well. In yet another implementation, the application server 1-20 may be installed at the sites of the database servers 1-10.

As regards hardware, the application server may be implemented by means of conventional server technology. Features described said WO2012/080578 application may be implemented by appropriate programming of computerized data processing systems and databases. Specifically, the one or more application generators perform the customization and creation of the application, after which the application is conveyed to a communication server for delivery to the mobile terminal. The servers are data processors with associated memory and peripheral hardware. Thus the features described in said WO2012/080578 application can be embodied as a software product which is storable in the memory of the application server, such that execution of the software product in the application server causes it to carry out the required functions.

A residual problem in the techniques described in the WO2012/080578 application is that the techniques are based on the assumption that the mobile terminals 1-80 accept the customized application from the application server 1-20. Unfortunately this assumption is not universally valid.

It is an increasing trend that hardware vendors tend to restrict delivery of mobile applications to mobile terminals. There are various reasons for that, such as a desire to collect royalties from applications sold and/or a desire to suppress software that does not meet with design guidelines, or software that comprises actual malware. It is common for mobile terminals to reject mobile applications that are not signed by the hardware vendor or an application store managed by the hardware vendor.

Applications for mobile terminals, called mobile applications in the following, are normally obtained from a repository managed by a supplier of the mobile terminal platform. For instance, Apple Inc. manages their own App Store, Amazon Appstore is a mobile application store for the Google Android operating system, Microsoft Phone Store and Microsoft Store are application stores for the Windows platform, and Nokia Store is the application store for Nokia devices. This list is non-exhaustive.

One of the problems associated with the above arrangement is that it is virtually impossible to deliver customized applications from mobile app stores. This is because each and every customized application has to be submitted for the app store for inspection and signing. Examples of applications that should be customized for individual customers include loyalty and/or membership cards, season passes for public transport and/or recreational facilities, and event passes that are available only for persons who physically attend an event.

A related problem is that the hardware vendors may require that applications delivered via their app stores are available for anyone, although payment may naturally be required. As a result, the app stores are not suitable for delivering applications which are targeted at a closed audience, such as applications for accessing sensitive information and/or applications that are in an alpha or beta test phase and not yet fit for publication.

US 8,261,231 discloses systems and methods for developing, customizing, and deploying mobile device applications are provided through a mobile application development and deployment platform. Preferably, these systems and methods are implemented in an Internet based environment that allows non-technical users to build sophisticated, highly-customizable cross-platform mobile applications. The platform allows users to select, input, create, customize, and combine various content, design characteristics, and application components, such as modules, some of which utilize features and functionality associated with various mobile devices and mobile operating systems.

US 2012/0240065 A1 discloses a Graphical User Interface (GUI) Customization System that provides users with applications that feature customized GUI configurations by applying one or more configuration parameters to common codebases in the applications without user intervention. Various embodiments of the GUI Customization System can provide different methods of acquiring, customizing, and providing applications and sets of configuration parameters to users.

### DISCLOSURE OF THE INVENTION

An object of the present invention is thus to provide techniques for delivering customized applications to mobile terminals that in principle do not support customized applications. The object of the invention is attained by aspects of the invention as defined in the attached independent claims. The dependent claims and the following detailed description and drawings relate to specific embodiments which solve additional problems and/or provide additional benefits.

One of the features of the present invention is that a generic version of the mobile application is delivered from an application store, while customization information for customizing the application is delivered from a customization server. Later in this description the generic version will be called a template application. As regards overall system and network architecture, the customization server can be located similarly to the application server described in connection with Figure 1, although the functionality of the customization server differs from the application server of Figure 1. By delivering the template application from an application store and the customization information for customizing the application from a customization server, it is possible to overcome the restriction that application stores may only supply digitally signed applications that have passed the app store's or hardware vendor's compliance checks. A related problem is that app stores may refuse to supply mobile applications that can be programmed to perform functions that have not passed the compliance checks. This is why the template application that is to be delivered from the app store must contain some rudimentary functionality, and the functionality cannot be upgraded without any restrictions.

Accordingly, it is another object of the present invention to provide techniques for combining a template application and customization information in a manner which leaves room for app stores to regulate what can or cannot be done with mobile applications delivered from the app stores.

An aspect of the invention is a method comprising delivering an application to a mobile terminal. Said delivering comprises:
- receiving a request for the application at a customization server, wherein the request contains identification information for the mobile terminal;
- at the customization server, sending instructions to the mobile terminal to download a template application from an application store, wherein the customization server and the application store are distinct entities;
- at the customization server, preparing customization information for the application and at least one of the mobile terminal and its user;
- at the customization server, sending the prepared customization information to the mobile terminal.

The template application comprises:
- data structures for making the template application compliant with constraints of the application store, wherein the constraints include a digital certificate proving integrity of the template application, wherein the digital certificate is provided by a platform provider of the mobile terminal or an entity trusted by the platform provider;
- an initial execution routine for detecting that the template application is being executed in the mobile terminal without installed customization information;
- a customization information retrieval routine for retrieving the customization information;
- a customization information install routine for installing the retrieved customization information from a site distinct from the application store; and
- application execution routines for executing the template application in the mobile terminal with the installed customization information, although the digital certificate proving integrity of the template application does not prove integrity of the customization information.

An embodiment of the method further comprises:
- at the customization server, sending an application order link to the mobile terminal, wherein the application order link points to the customization server;
- at the customization server, responsive to receiving a request subsequent to the application order link from the mobile terminal, performing said acts of preparing and sending customization information and sending instructions to download the template application.

Another embodiment of the method comprises: at the customization server, sending the instructions to download the template application in a web application. The web application may also comprise at least part of the customization information.

In some implementations the identification information of the mobile terminal may comprise a telecommunications network address associated with the mobile terminal, such as an MSISDN number, the user's e-mail address, or the like.

In some implementations the identification information of the mobile terminal may comprise information stored in a cookie at the mobile terminal. Alternatively or additionally the identification information of the mobile terminal may comprise a personalized token created for the mobile terminal.

In some implementations said redirecting the mobile terminal to an application store may comprise determining which of several application stores supports the mobile terminal and redirecting the mobile terminal to the determined application store. Said determining may comprise examining a message header transmitted by the mobile terminal.

Another aspect of the invention is an customization server for preparing customization information for the mobile application. The customization server is typically a programmed data processing apparatus which comprises means for performing the acts of the inventive method. The various means for performing the acts can be embodied as program routines stored in a memory, the routines instructing one or more processors to utilize communication and processing resources of the customization server such that the acts of the inventive method are accomplished.

Yet another aspect of the invention is a template application comprising:
- data structures for making the template application compliant with constraints of the application store, wherein the constraints include a digital certificate proving integrity of the template application, wherein the digital certificate is provided by a platform provider of the mobile terminal or an entity trusted by the platform provider;
- an initial execution routine for detecting that the template application is being executed in the mobile terminal without customization information;
- a customization information retrieval routine for retrieving the customization information from a site distinct from the application store;
- a customization information install routine for installing the customization information;
- program code instructions for executing the template application in the mobile terminal with the installed customization information, although the digital certificate proving integrity of the template application does not prove integrity of the customization information.

In a typical but non-restrictive implementation, the constraints of the application store, which the template application complies with, comprises a digital signature by the platform provider or an entity trusted by the provider, while the customization information is not digitally signed.

The invention can be embodied in several different embodiments, some of which are defined in the attached dependent claims and/or in the following detailed description and the attached drawings. Yet other embodiments and variations thereof are apparent to those skilled in the art based on the description of the present invention and the drawings.

In the context of the present invention, the following terminology will be used:

A mobile terminal means a mobile device capable of acting as a telecommunications terminal.

A mobile application means a software application configured to be executed in a mobile terminal.

An app(lication) store means a software repository from which mobile application(s) are delivered to mobile terminal(s). App stores are typically managed by entities related to vendors of respective mobile terminals. The app store managers typically impose a set of restrictions on the mobile applications delivered via the app stores. Wordings like "typically managed by" and "typically impose" imply that these sentences describe common situations which are related to the problems underlying the invention. It should be understood, however, that the restrictions imposed by hardware vendors and/or app store managers are not necessary for the invention and its embodiments. A problem underlying the present invention is the difficulty of providing customized applications to a mobile terminal whose manufacturer has restricted the mobile terminal's capability of accepting applications from sources other than vendormanaged app stores. Naturally the invention can be used to provide customized applications to mobile terminals that are not restricted in this respect.

A web application refers to an application with limited functionality. In the present context a benefit of a web application is that it does not have to be certified by the app store.

A template application means an incomplete application that is compliant with constraints of the app store but not customized for any particular mobile telephone or its user.

Customization information refers to information needed to customize the template application with respect to the mobile terminal in which it is executed or a user of the mobile terminal or both.

### BRIEF DESCRIPTION OF THE DRAWINGS

In the following the invention will be described in greater detail by means of specific embodiments with reference to the attached drawings, in which
Figure 1 shows an overall network and system architecture in which the invention can be used;
Figure 2 schematically shows an exemplary block diagram for a customization server;
Figures 3A through 3D are signaling diagrams for application request phase;
Figures 4A through 4D are signaling diagrams for application download/install phase;
Figures 5A and 5B are signaling diagrams for application customization phase.

### DETAILED DESCRIPTION OF THE SPECIFIC EMBODIMENTS

Figure 1 shows an exemplary system and network architecture from an earlier commonly-owned patent application, with some modifications. One of the modifications compared with the earlier patent application is the fact that delivery of the customized application is split between the tasks of delivering a template application 1-50 (a generic version of the mobile application) and delivering customization information 1-30 for customizing the template application. The template application is delivered from an application store 1-40. The customization information for customizing the application is delivered from a customization server 1-20, whose placement in the system and network architecture may be similar to that of the application server of the earlier patent application.

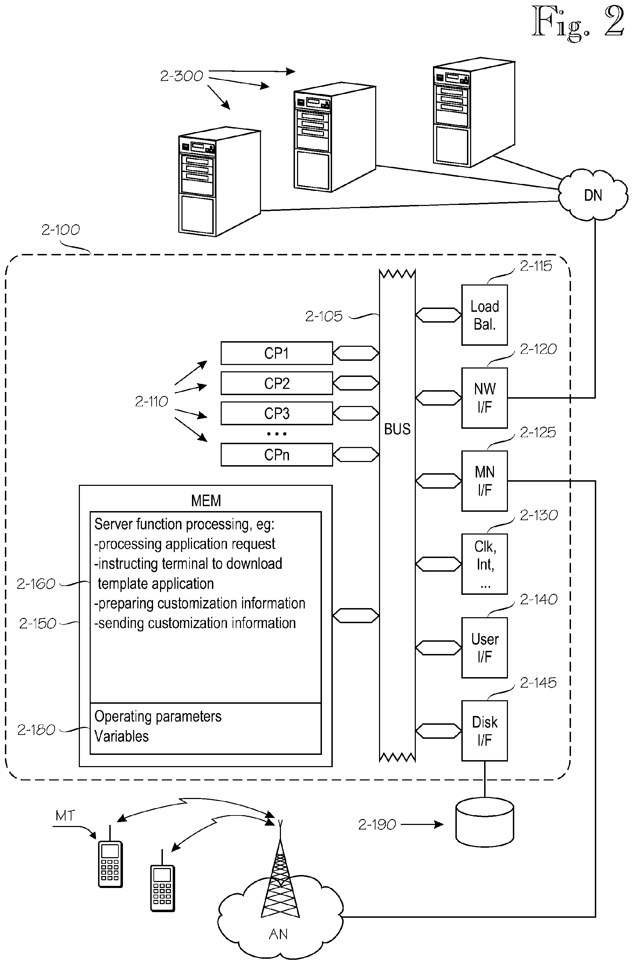

Figure 2 schematically shows an exemplary block diagram for a customization server 1-20. The two major functional blocks of the customization server system 1-20 are a server computer 2-100 and a storage system 2-190. The server computer 2-100 comprises one or more central processing units CP1 ... CPn, generally denoted by reference numeral 2-110. Embodiments comprising multiple processing units 2-110 are preferably provided with a load balancing unit 2-115 that balances processing load among the multiple processing units 2-110. The multiple processing units 2-110 may be implemented as separate processor components or as physical processor cores or virtual processors within a single component case. The server computer 2-100 further comprises a network interface 2-120 for communicating with various data networks, which are generally denoted by reference sign DN. The data networks DN may include local-area networks, such as an Ethernet network, and/or wide-area networks, such as the internet. Assuming that the server computer 2-100 acts as a customization server 1-20, it may serve one or more service-specific systems 2-300 via the data networks DN. Non-restrictive examples of the service-specific systems 2-300 include the application issuers 1-10 and application servers 1-90, such as loyalty card servers, shown in Figure 1.

Reference numeral 2-125 denotes a mobile network interface, through which the server computer 2-100 may communicate with various access networks AN, which in turn serve the mobile terminals MT used by end users or clients.

The server computer 2-100 of the present embodiment may also comprise a local user interface 2-140. Depending on implementation, the user interface 2-140 may comprise local input-output circuitry for a local user interface, such as a keyboard, mouse and display (not shown). Alternatively or additionally, management of the server computer 2-100 may be implemented remotely, by utilizing the network interface 2-120 and any internet-enabled terminal that provides a user interface. The nature of the user interface depends on which kind of computer is used to implement the server computer 2-100. If the server computer 2-100 is a dedicated computer, it may not need a local user interface, and the server computer 2-100 may be managed remotely, such as from a web browser over the internet, for example. Such remote management may be accomplished via the same network interface 2-120 that the server computer utilizes for traffic between itself and the client terminals.

The server computer 2-100 also comprises memory 2-150 for storing program instructions, operating parameters and variables. Reference numeral 2-160 denotes a program suite for the server computer 2-100.

The server computer 2-100 also comprises circuitry for various clocks, interrupts and the like, and these are generally depicted by reference numeral 2-130. The server computer 2-100 further comprises a storage interface 2-145 to the storage system 2-190. When the server computer 2-100 is switched off, the storage system 2-190 may store the software that implements the processing functions, and on power-up, the software is read into semiconductor memory 2-150. The storage system 2-190 also retains operating and variables over power-off periods. In large-volume implementations, that is, implementations wherein a single server computer 2-100 serves a large number of clients via respective mobile terminals MT, the storage system 2-190 may be used to store the dynamic dialog matrices associated with the clients and mobile terminals MT. The various elements 2-110 through 2-150 intercommunicate via a bus 2-105, which carries address signals, data signals and control signals, as is well known to those skilled in the art.

The inventive techniques may be implemented in the server computer 2-100 as follows. The program suite 2-160 comprises program code instructions for instructing the set of processors 2-110 to execute the functions of the inventive method, wherein the functions include performing the application customization features according to the invention and/or its embodiments.

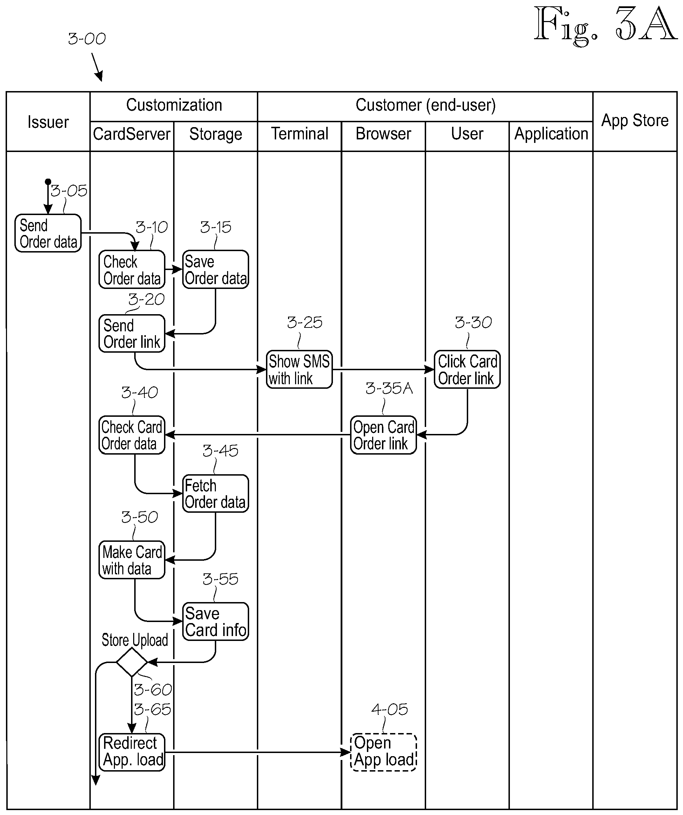

Figures 3A through 3D are signaling diagrams for application request phase, which is generally denoted by reference numeral 3-00. The signaling diagrams will be described under the assumption that the application is a loyalty card, although the invention or its embodiments are not restricted thereto, unless stated otherwise. In the following discussion, a customer means the person or entity for whom/which the application (loyalty card) is being generated. The customer is typically a real or potential customer of the issuer. For instance, in case the application is an access pass, the issuer may be the organizer of the event or a ticket vendor authorized by the event organizer, while the customer is a person for whom access to the event is granted. The customer is also a user of a mobile terminal, although the user is not necessarily the owner of the terminal or the subscriber of its service contract.

Figure 3A shows an embodiment wherein a connectionless message, such as SMS (Short Message Service) message or MMS (Multimedia Message Service) message is used to invoke downloading of the template application by the mobile terminal. For the sake of clarity and brevity, the following drawings and their descriptions use "card" as abbreviation for "loyalty card", which in turn is an illustrative but non-restrictive example of a customized application. In step 3-05 the issuer 1-10 sends an order for the loyalty card (or any other type of application) to the customization server 1-20. One of the application generators 1-23 will be responsible for this task. A basic version of the customization server 1-20 may only contain one application generator, while a more ambitious version may comprise multiple application generators and a resource allocator that assigns the loyalty card order to an available application generator. In an optional step 3-10 the application generator may perform one or more checks on the loyalty card order. For instance the check(s) may relate to completeness of the customization information (all mandatory fields provided?), correctness (cross-check from external databases), sanity (range checks of numerical values), or the like. In step 3-15 the customization server stores the card order information in a database for customization information, denoted by reference numeral 1-27. In order to be able to retrieve the stored customization information (eg loyalty card order information), the customization server assigns some kind of a identifier to the customization information. The mobile terminal will later send a request for the card to the customization server, the request including the identifier of the customization information. Accordingly, this identifier must be one which the mobile terminal has, such as the mobile terminal's MSISDN number, or a temporary identifier which can be sent to the mobile terminal and which the mobile terminal can use when requesting the customized card information.

In embodiments wherein the customization server 1-20 initiates downloading of the customized application to the mobile terminal, the customization server should have information on a network address by which the mobile terminal 1-80 can be reached. In one implementation the card order data sent in step 3-05 contains the MSISDN number of the terminal 1-80 used by the customer. In another implementation the card order data contains the customer's name, customer number or some other identifier of the customer by which the customization server is able to retrieve the MSISDN number from an internal or external database. In step 3-20 the customization server 1-20 sends the terminal 1-80 a connectionless message, such as an SMS message, which contains a network address by which the terminal 1-80 may confirm that it is ready to accept the loyalty card or some other kind of customized application. In one specific implementation the network address of the customization server may be concatenated with an identifier or address of the mobile terminal. Such a concatenation of a network address and the identifier of the mobile terminal may take the following form:
http://customization-server.mobi/customer/23456

In the above network address, customization-server.mobi is the application server's network address, while customer/23456 is a temporary identifier assigned to the mobile terminal. In other implementations the mobile terminal's MSISDN number may be used instead of a temporary identifier.

In response to the short message, which includes the network address of the customization server, the mobile terminal may propose activation of a web browser to this network address (step 3-25), in which case the terminal waits for the user's acceptance (step 3-30) before navigating to the network address. Alternatively, the mobile terminal may be configured to navigate to the network address without requiring the user's acceptance. As a third alternative, the terminal user may pick up the network address from the short message and navigate to that address himself/herself. In any case the mobile terminal navigates to the customization server's network address in step 3-35A. Inclusion of the user's or mobile terminal's temporary identifier in the messages 3-20 and 3-35A helps the customization server to identify the mobile terminal, and the user does not have to perform a separate login procedure.

In an optional step 3-40 the customization server inspects the response from the mobile terminal and determines certain customer-specific and/or terminal-specific parameters, which may be explicitly or implicitly indicated by the response message 3-35A from the mobile terminal. For example, such explicitly indicated parameters, which may be contained in the body (payload) of the response message 3-35A, may indicate certain user-determined preferences. On the other hand, implicitly indicated parameters, which may be carried in the header of the response message 3-35A, may indicate certain terminal-specific parameters, such as the terminal's type which, in turn, can be used to retrieve the resolution of the terminal's display. As a result, the customization server may be able to optimally format graphical content for the customer's mobile terminal.

The act of customizing the customization information on the basis of information explicitly or implicitly carried by the response message 3-35A is optional. Depending on the nature of the application to be customized, the application can be entirely customized on the basis of the information provided by the issuer, in which case the response message 3-35A is a mere confirmation from the customer's mobile terminal that the customer is ready to accept the application to be customized. In yet further implementations, the response message 3-35A may be followed by a dialog (not shown) between the customization server and the customer's mobile terminal, this dialog providing the required and optional parameters for customizing the application.

In step 3-45 the customization server retrieves from the storage the card information that was received in step 3-05 and stored in step 3-15. If desired, the issuer-provided information may be complemented and/or further customized on the basis of the information that is carried by the response message 3-35A or requested from the mobile terminal in a separate dialog. When the data for the customized application is complete, the customization server creates an information package of it in step 3-50 and stores it in step 3-55.

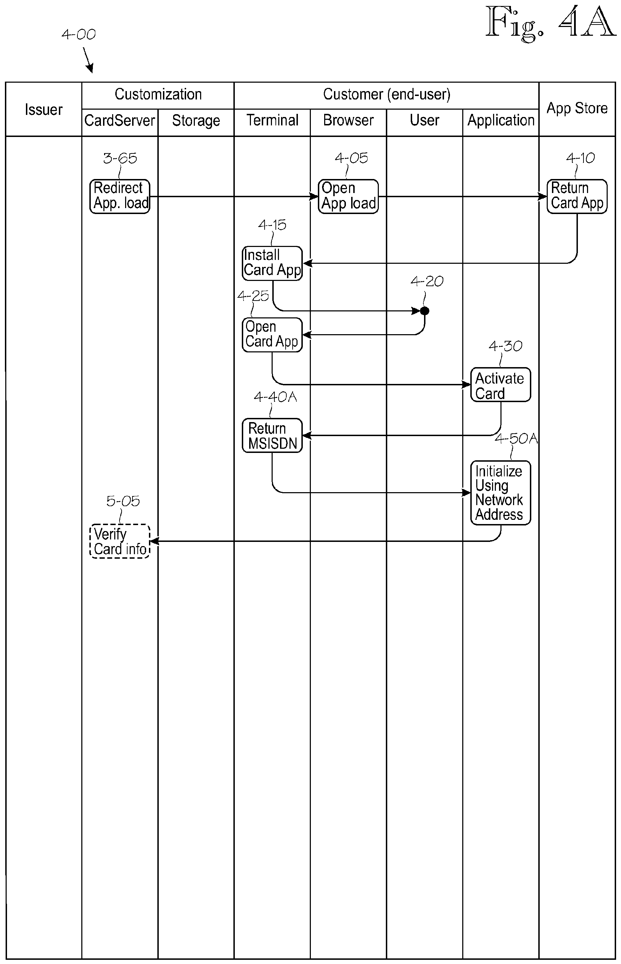

In the embodiment shown in Figure 3A, step 3-60 comprises a test for determining an appropriate repository for the customized application, depending on the type of the customer's mobile terminal. If the customer's mobile terminal is of a type that only accepts applications from the vendor's own (or authorized) app store, the process continues to step 3-65, in which the customization server sends a message to the mobile terminal, the message directing the mobile terminal to the authorized app store. Downloading a rudimentary or template version of the application from the app store will be further described in connection with Figures 4A - 4D.

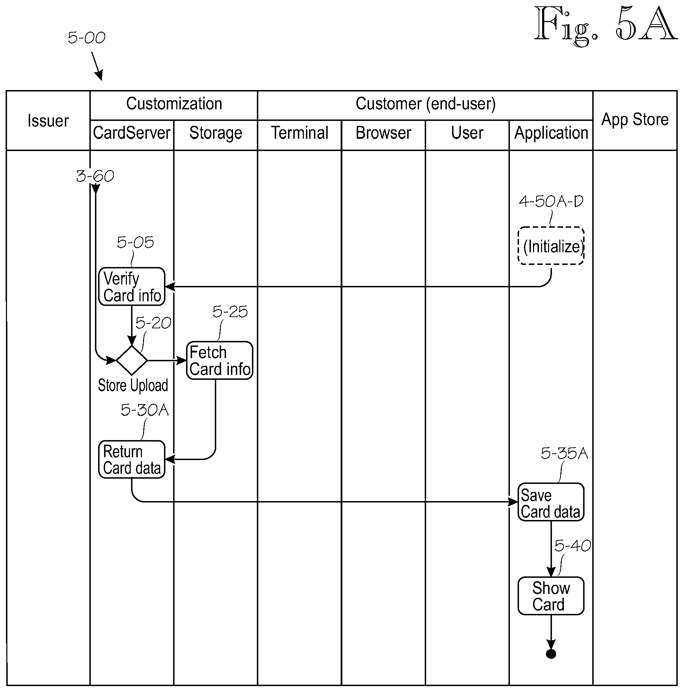

On the other hand, if the result of the test 3-60 is that the mobile terminal accepts applications from repositories independent from the vendor of the terminal, the procedures described in connection with Figures 4A - 4D can be skipped, and the process continues to step 5-20 in one of Figures 5A-5B.

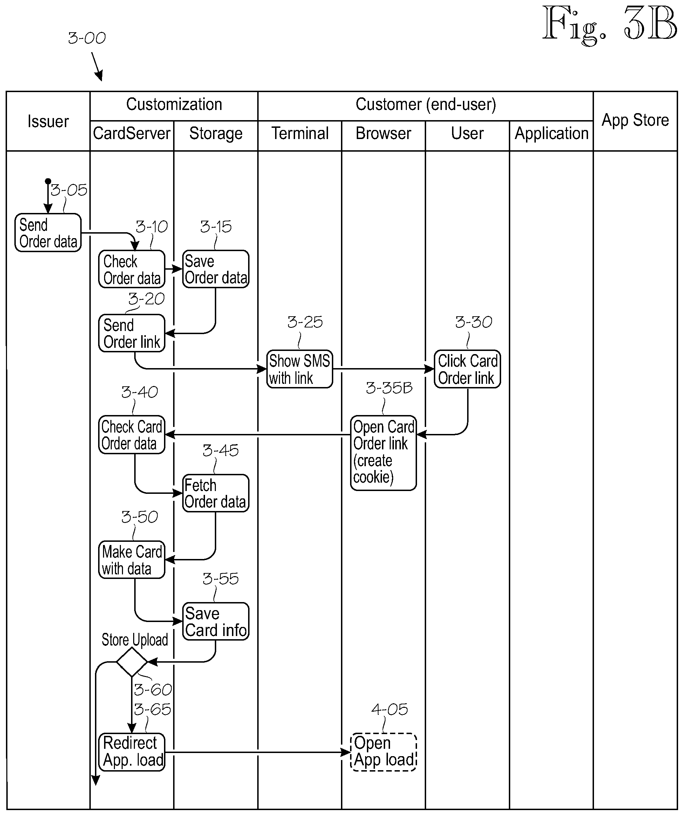

The implementation shown in Figure 3B differs from the one shown in Figure 3A in that step 3-35A is replaced by step 3-35B, in which the browser running in the mobile terminal creates a cookie, which will be used later in an embodiment of the application download/install phase. The browser stores a number of identification data items from a web page pointed by the link sent in step 3-25.

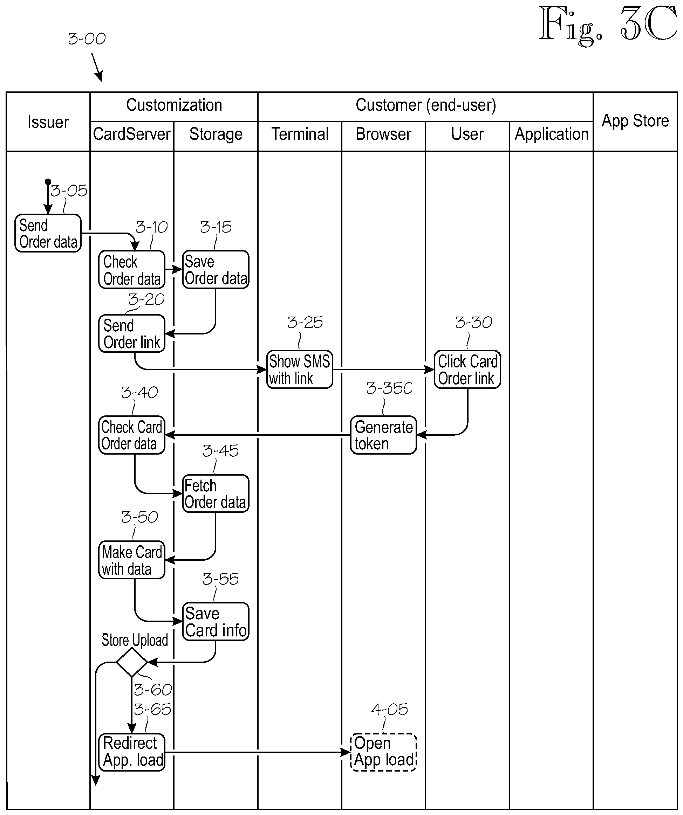

The implementation shown in Figure 3C differs from the one shown in Figure 3A in that step 3-35A is replaced by step 3-35C, in which the mobile terminal uses the link or message sent in step 3-25 to create a personalized token that the mobile terminal can use later to request customization information for the application. Let us assume that the link sent in step 3-25 is of the form:
http://customization-server.mobi/customer/23456

In this example, the customer identifier 23456 can be scrambled or encrypted with any of a number of encryption algorithms. For instance, the customer identifier in the link may be encrypted to h25GzWgt09, and this can be decrypted to 23456. It should be noted that in addition to carrying the token in the link, the token can be carried in a number of other locations in the message, which can be an SMS message, MMS message or imessage, to name just a few types of appropriate messages. For instance, customization-server.mobi/23456 or $token.

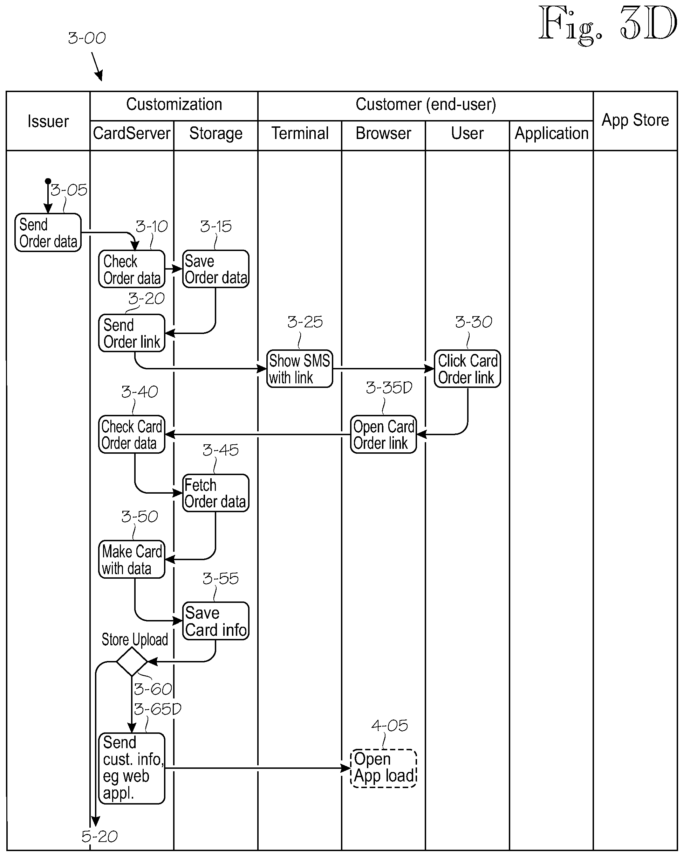

The implementation shown in Figure 3D differs from the ones shown in Figures 3A - 3C in that the customization information is sent to the mobile terminal in a before the mobile terminal is instructed to download the template application from the app store. Again, step 3-35A is replaced by step 3-35D, which in the present embodiment is an act of requesting the customization information from the customization server by using any available identifier, such as those described in connection with Figures 3A - 3C (steps 3-35A - 3-35C). Another deviation from the earlier embodiments is that step 3-65 is replaced by step 3-65D, in which the customization server sends the customization information to the mobile terminal in a web application. Commonly-owned PCT application WO2012/080578 discloses techniques for providing customized web applications to a mobile terminal. For the purposes of the present discussion, a web application is one that need not be certified or provided by the app store. A trade-off is that the functionality of a web application is typically significantly limited. As regards the present embodiment it suffices, however, that the web application is able to initiate downloading and installation of the template application from the app store.

Figures 4A - 4D are signaling diagrams for application download/install phase, which is generally denoted by reference numeral 4-00. Figure 4A will be described first. In connection with Figures 4A - 4D only the differences to Figure 4A will be described.

If the test 3-60 indicated that the mobile terminal only accepts applications from authorized app stores, step 3-65 begins a process in which the mobile terminal is directed to download a rudimentary or template version of the application from the app store. In some implementations the customization server may redirect the mobile terminal's web connection to a specific address within the app store serving the terminal, wherein the specific address contains the template application for the customized application, such as loyalty card, which is being generated. For instance, the specific address for the template application may take the following form:
http://app-store.mobi/acme_card123

Herein, the "app-store.mobi" is the network address of the Application store, while "acme_card123" is an identifier of the loyalty card. Although the loyalty card is not customized for any specific customer or terminal, the issuer ("Acme") may offer several loyalty card programs, and "acme_card123" identifies one of them. The concatenation of the network address and the identifier of the loyalty card may be sent as a link contained in a connectionless message (SMS, MMS, ...) which tells the customer that they can initiate delivery of the loyalty card by activating the link.

In the present context, the term "template application" means an application which does not have the customization information for the customer's loyalty card or other application. The app store or the mobile terminal are not aware of the fact that the template application is an incomplete application. If the app store and/or the terminal require that applications installed on the mobile terminal are digitally signed, the template application should be digitally signed, whereby the mobile terminal can trust the template application and its origin.

From step 3-65 the process continues to step 4-05 in which the mobile terminal navigates to the download page of the app store. In step 4-10 the app store returns the requested template application to the mobile terminal. In step 4-15 the mobile terminal installs the template application. In step 4-20 some user activity may be required or requested to open (launch) the card application. In step 4-25 the terminal begins the execute the template application and transfer control to it in step 4-30. From this point on the implementations shown in Figures 4A - 4D differ. In the implementation shown in Figure 4A, the template application requests the MSISDN number from the mobile terminal in step 4-40A. In step 4-50A the template application initializes application customization phase by sending the mobile terminal's network address, such as its MSISDN number, to the customization server. Thereafter the process continues to step 5-05, which is described in connection with Figures 5A - 5B.

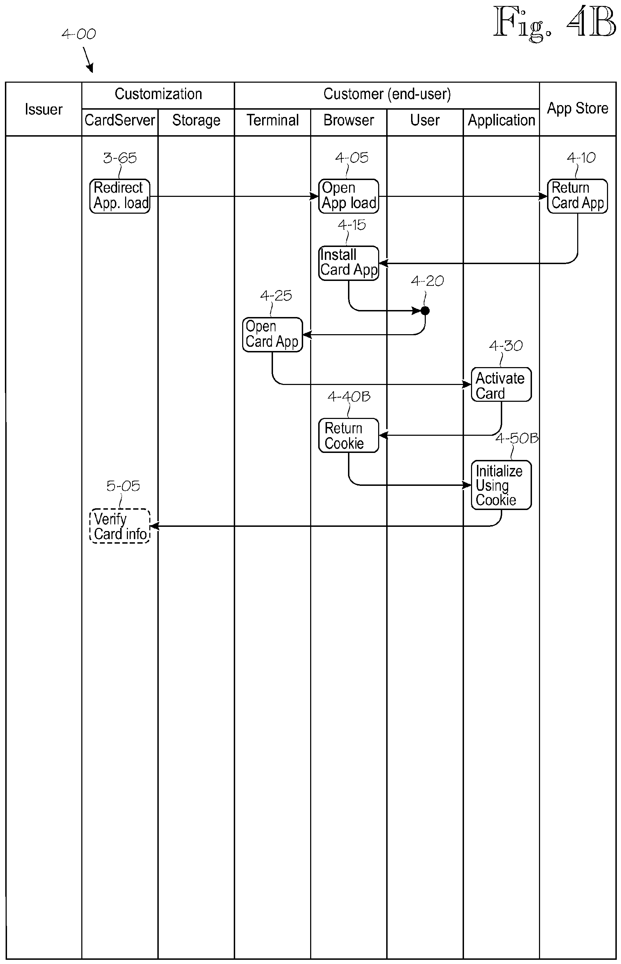

The implementation shown in Figure 4B differs from the one shown in Figure 4A in that step 4-40A is replaced by step 4-40B, in which the template application requests the mobile terminal to return a cookie which was created in step 3-35B (see Figure 3B). Similarly, step 4-50A is replaced by step 4-50B, in which the template application returns contents of the cookie to the customization server.

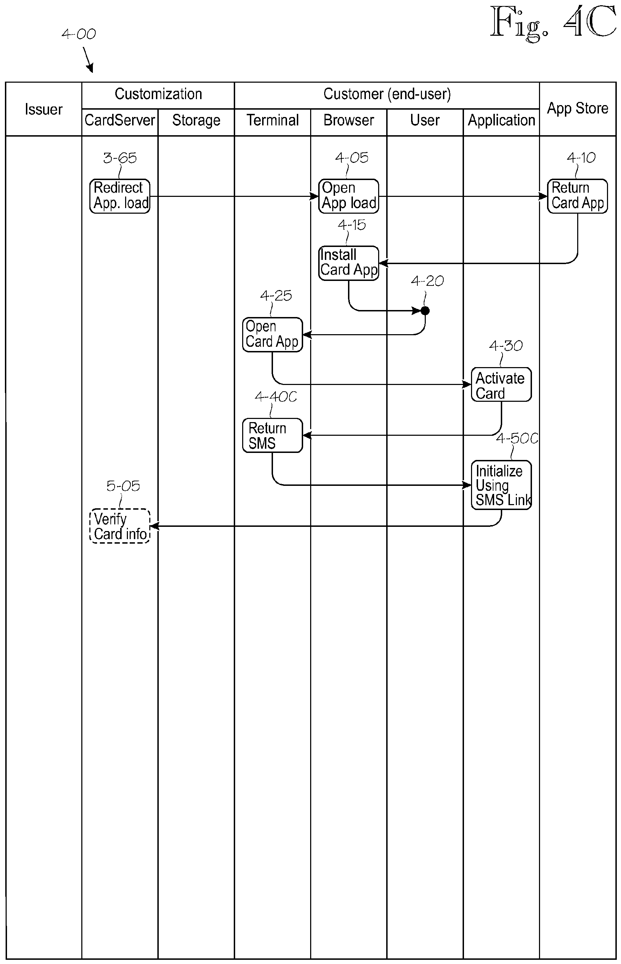

The implementation shown in Figure 4C differs from the one shown in Figure 4A in that step 4-40A is replaced by step 4-40C, in which the template application requests the mobile terminal to return a personalized identifier (eg "token") for the mobile terminal which was created in step 3-35C (see Figure 3C). Similarly, step 4-50A is replaced by step 4-50C, in which the template application returns the personalized identifier ("token") to the customization server. As was noted in connection with step 3-35C, the token can be carried in a number of other locations in the message, and carrying the token in a link is but one representative example.

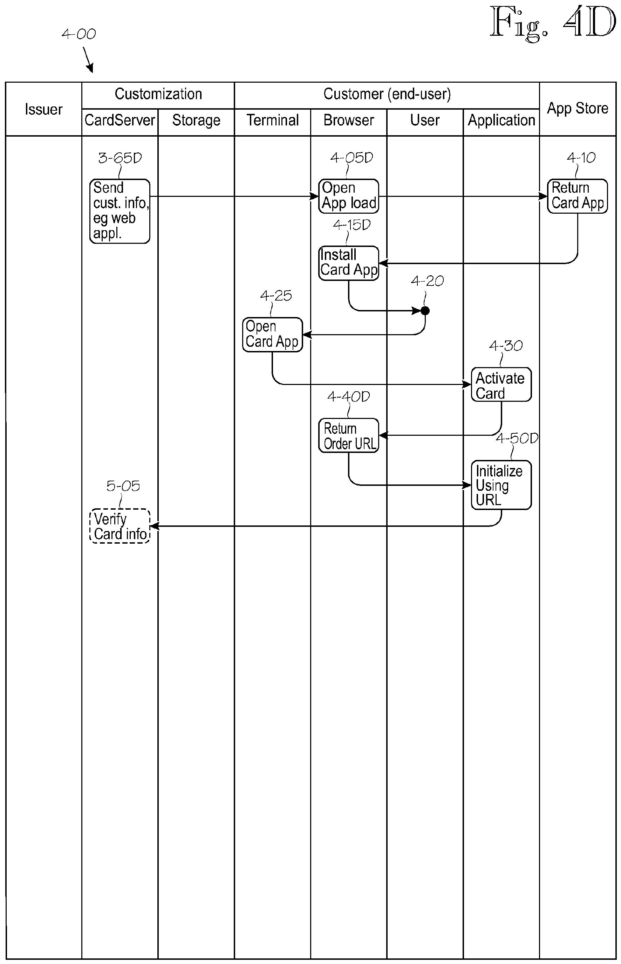

The implementation shown in Figure 4D differs from the one shown in Figure 4A in respect of step 4-05D wherein the mobile terminal receives a web application from the customization server. The web application instructs the mobile terminal to download the template application from the app store in step 4-10. In the present embodiment step 4-15D comprises customization of the template application with the data provided in the web application that was sent in step 3-65D. If the customization information sent in the web application is complete, the application is now complete and it can be opened by the terminal (step 4-25) and activated (step 4-30).

In other implementations the customization information sent in the web application may be incomplete or non-existent, in which case some or all of the customization information is retrieved from the customization server after downloading the template application from the app store. These acts are shown in steps 4-40 and 4-50, which may be performed as described in connection with the previous embodiments (4-40A - 4-40C; 4-50A - 4-50C).

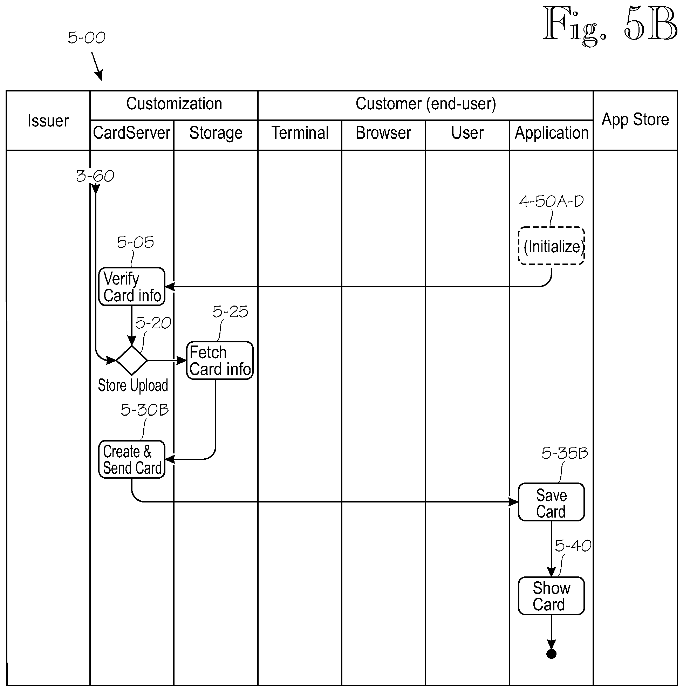

Figures 5A and 5B are signaling diagrams for an application customization phase, which is generally denoted by reference numeral 5-00. Figure 5A is for the case wherein the mobile terminal is of a type that only accepts applications from the vendor's own (or authorized) app store. In this case the steps shown in one of Figures 4A - 4D have been performed in order to download and install the template application from the authorized app store. The initialization request 4-50 from the template application comprises an identifier for the customization information that is needed for the particular mobile terminal. As stated previously, a non-exhaustive list of suitable identifiers include the mobile terminal's network address, such as its MSISDN number, cookie-based information, a personalized "token" or a URL link.

In step 5-05 the customization server 1-20 receives an initialization request from the template application. In step 5-25 the customization server uses whatever identifier was used to identify the customization information to retrieve the information from the storage. In step 5-30A the customization server sends the customization information to the mobile terminal, for used by the template application. In step 5-35A the mobile terminal combines the authorized but non-customized template application obtained from the authorized app store and the customization information which need not be authorized by the platform provider). As a result, the mobile terminal now comprises and is able to execute an application which is both authorized and customized for a particular customer and/or mobile terminal. Step 5-40 exemplifies execution of that application.

Figure 5B is for the case wherein the mobile terminal accepts application from sources other than the authorized app store, step 5-20 can be reached directly from one of Figures 3A - 3D, thus skipping the application download/install phase from the authorized app store. In this case the trigger to retrieve the customization information for the particular mobile terminal comes from the customization server itself, and the identifier for the customization information need not be indicated from outside of the customization server.

Steps 5-30B and 5-35B are analogous with the steps 5-30A and 5-35B, apart from the fact that the customization server creates and sends a complete customized application to the mobile terminal. The customization server needs to sends a complete customized application because the scenario shown in Figure 5B is based on the assumption that the mobile terminal does not have to obtain the template application from the app store.

The embodiments described in detail are exemplary and not exhaustive. Figures 3A - 3D illustrate different techniques for identifying the particular mobile terminal for which the customization information is being created by the customization server. Figures 4A - 4D illustrate different techniques by which a template application obtained from an authorized app store can use those identifiers to request customization information from the customization server. Finally, Figure 5A shows an embodiment by which the customization server can send the customization information to the template application on the mobile terminal, whereby the application being executed by the mobile terminal can be customized without submitting each customized version for approval by the app store. Those skilled in the art will realize that other types of identifiers can be used in addition to the ones described in complete detail herein.

Figure 5B and the bypass route from step 3-60 to step 5-20 (omitting Figures 4A - 4D) are optional in the sense that even if the mobile terminal is of a type that does not require provisioning of applications from an authorized app store, an app store other than the customization server can nevertheless be used to supply a template application which is customized by using the techniques described herein. In other words Figure 5B and the bypass route from step 3-60 to step 5-20 can provide optional added functionality to the customization server, by offering more freedom in the provisioning of the application.

It will be apparent to a person skilled in the art that, as the technology advances, the inventive concept can be implemented in various ways. The invention and its embodiments are not limited to the examples described above but may vary within the scope of the claims.

## Claims

1. A method comprising:
delivering a customized identification document application to a mobile terminal (1-80), wherein said delivering comprises:
- receiving (3-05) a request for the customized identification document application at a customization server (1-20) and storing order data relating to the customized identification document application, wherein the request contains identification information for the mobile terminal and/or its user;
- at the customization server, assigning an identifier for the order data;
- at the customization server, sending (3-20) an application order link to the mobile terminal, wherein the application order link points to the customization server and comprises the identifier;
- at the customization server, receiving a request (3-35A, 3-35B, 3-35C, 3-35D) from the mobile terminal, the request comprising the identifier;
- at the customization server, preparing (3-50) a customization information (1-30) package for the customized identification document application and at least one of the mobile terminal and its user, the customization information package comprising the identifier;
- at the customization server, sending instructions (3-65, 3-65D) to the mobile terminal to download a template application (1-50) for the customized identification document application from an application store (1-40), wherein the customization server and the application store are distinct entities and the application store is provided by a platform or hardware provider of the mobile terminal and imposes constraints on provided applications, the constraints including a digital certificate providing integrity of the provided applications and indicating passing of compliance checks by the platform or hardware provider or a trusted entity;
- at the customization server, receiving (5-05) an initialization request from the template application executed by the mobile terminal, the initialization request comprising the identifier;
- at the customization server, identifying the prepared customization information package based on the identifier;
- at the customization server, sending (5-30A) the prepared customization information package relating to the customized identification document application to the mobile terminal;
wherein the template application comprises:
- data structures for making the template application compliant with the constraints of the application store (1-40), wherein the constraints include a digital certificate proving integrity of the template application;
- an initial execution routine for detecting that the template application is being executed in the mobile terminal without installed customization information;
- a customization information retrieval routine, responsive to said detecting that the template application is being executed without installed customization information, for retrieving the customization information only from a site distinct from the application store, wherein the customization information is for the customized identification document application and specific for at least one of the mobile terminal and its user;
- a customization information install routine for installing the retrieved customization information; and
- application execution routines for executing the template application in the mobile terminal with the installed customization information, although the digital certificate proving integrity of the template application does not prove integrity of the customization information.

2. The method according to claim 1, further comprising: at the customization server, sending (3-65D) the instructions to download the template application in a web application.

3. The method according to claim 2, wherein the web application also comprises at least part of the customization information.

4. The method according to any one of the preceding claims, wherein tile identification information of the mobile terminal comprises a telecommunications network address for the mobile terminal (eg MSISDN, e-mail, ...).

5. The method according to any one of the preceding claims, wherein the identification information of the mobile terminal comprises information stored in a cookie at the mobile terminal.

6. The method according to any one of the preceding claims, wherein the identification information of the mobile terminal comprises a personalized token (3-35C) created for the mobile terminal.

7. The method according to any one of the preceding claims, wherein said redirecting the mobile terminal to an application store comprises determining which of several application stores supports the mobile terminal and redirecting the mobile terminal to the determined application store.

8. The method according to claim 7, wherein determining which of several application stores supports the mobile terminal comprises examining a message header transmitted by the mobile terminal.

9. The method according to any one of the preceding claims, wherein the constraints of the application store comprise a digital signature, and wherein the customization information does not comprise the digital signature.

10. A customization server (1-20, 2-100) for a telecommunication network, the customization server comprising:
- means for receiving (3-05) a request for a customized identification document application at a customization server (1-20) and means for storing order data relating to the customized identification document application, wherein the request contains identification information for a mobile terminal (1-80) and/or its user;
- means for assigning an identifier for the order data;
- means for sending (3-20) an application order link to the mobile terminal, wherein the application order link points to the customization server and comprises the identifier;
- means for receiving a request (3-35A, 3-35B, 3-35C, 3-35D) from the mobile terminal, the request comprising the identifier;
- means for at the customization server, preparing (3-50) a customization information (1-30) package for the customized identification document application and at least one of the mobile terminal and its user, the customization information package comprising the identifier;
- means for sending instructions (3-65, 3-65D) to the mobile terminal to download a template application for the customized identification document application from an application store (1-40), wherein the customization server and the application store are distinct entities and the application store is provided by a platform or hardware provider of the mobile terminal and imposes constraints on provided applications the constraints including a digital certificate providing integrity of the provided applications and indicating passing of compliance checks by the platform or hardware provider or a trusted entity;
- means for receiving (5-05) an initialization request from the template application executed by the mobile terminal, the initialization request comprising the identifier;
- means for identifying the prepared customization information package based on the identifier;
- means for sending (3-65, 5-30A, 5-30B) the prepared customization information package relating to the customized identification document application to the mobile terminal;
wherein the template application comprises:
- data structures for making the template application compliant with the constraints of the application store,
- an initial execution routine for detecting that the template application is being executed in the mobile terminal without installed customization information;
- a customization information retrieval routine, responsive to said detecting that the template application is being executed without installed customization information, for retrieving the customization information only from a site distinct from the application store, wherein the customization information is for the customized identification document application and specific for at least one of the mobile terminal and its user;
- a customization information install routine for installing the retrieved customization information; and
- application execution routines for executing the template application in the mobile terminal with the installed customization information, although the digital certificate proving integrity of the template application does not prove integrity of the customization information.

11. A customized identification document application for a mobile terminal (1-80), wherein the customized identification document application comprises a template application (1-50) not customized for any particular mobile terminal or its user, and wherein the template application is configured for delivery to a plurality of mobile terminals from an application store (1-40), wherein the template application comprises:
- data structures for making the template application compliant with constraints of the application store, wherein the constraints include a digital certificate proving integrity of the template application, wherein the digital certificate is provided by a platform provider of the mobile terminal or an entity trusted by the platform provider and indicates passing of compliance checks by the platform or hardware provides or a trusted entity;
- an initial execution routine for detecting that the template application is being executed in the mobile terminal without customization information (1-30);
- a customization information retrieval routine, responsive to said detecting that the template application is being executed without installed customization information, for retrieving the customization information only from a site distinct from the application store, wherein the customization information is for the customized identification document application and specific for at least one of the mobile terminal and its user;
- a customization information install routine for installing the customization information;
- application execution routines for executing the template application in the mobile terminal with the installed customization information, although the digital certificate proving integrity of the template application does not prove integrity of the customization information.

12. The application according to claim 11, wherein the application comprises an identification document identifying a specific mobile terminal.

13. The application according to claim 11, wherein the application comprises an identification document identifying a specific user of a mobile terminal.

## Patentansprüche

1. Ein Verfahren, umfassend:
Zustellen einer angepassten Identifikationsdokumentanwendung an ein mobiles Endgerät (1-80), wobei das Zustellen umfasst:
- Empfangen (3-05) einer Anfrage nach der angepassten Identifikationsdokumentanwendung bei einem Anpassungsserver (1-20) und Speichern von Auftragsdaten betreffend die angepasste Identifikationsdokumentanwendung, wobei die Anfrage eine Identifikationsinformation für das mobile Endgerät und/oder dessen Anwender enthält;
- bei dem Anpassungsserver, Zuordnen eines Identifikationselements für die Auftragsdaten;
- bei dem Anpassungsserver, Senden (3-20) eines Anwendungsauftragslinks an das mobile Endgerät, wobei der Anwendungsauftragslink auf den Anpassungsserver hinweist und das Identifikationselement umfasst;
- bei dem Anpassungsserver, Empfangen einer Anfrage (3-35A, 3-35B, 3-35C, 3-35D) von dem mobilen Endgerät, wobei die Anfrage das Identifikationselement umfasst;
- bei dem Anpassungsserver, Vorbereiten (3-50) eines Anpassungsinformations (1-30) Pakets für die angepasste Identifikationsdokumentanwendung und zumindest das mobile Endgerät und/oder dessen Anwender, wobei das Anpassungsinformationspaket das Identifikationselement umfasst;
- bei dem Anpassungsserver, Senden von Anweisungen (3-65, 3-65D) an das mobile Endgerät zum Herunterladen einer Vorlagenanwendung (1-50) für die angepasste Identifikationsdokumentanwendung von einem Anwendungsladen (1-40), wobei der Anpassungsserver und der Anwendungsladen getrennte Einheiten sind und der Anwendungsladen durch einen Plattform oder Hardware-Provider des mobilen Endgeräts bereitgestellt ist und Beschränkungen an bereitgestellte Anwendungen erhebt, wobei die Beschränkungen ein digitales Zertifikat umfassen, welches eine Integrität der bereitgestellten Anwendungen bereitstellt und ein Durchlaufen von Übereinstimmungsüberprüfungen durch den Plattform oder Hardware-Provider oder einer vertrauenswürdigen Einheit angibt;
- bei dem Anpassungsserver, Empfangen (5-05) einer Initialisierungsanfrage von der durch das mobile Endgerät ausgeführten Vorlagenanwendung, wobei die Initialisierungsanfrage das Identifikationselement umfasst;
- bei dem Anpassungsserver, Identifizieren des vorbereiteten Anpassungsinformationspakets basierend auf dem Identifikationselement;
- bei dem Anpassungsserver, Senden (5-30A) des vorbereiteten Anpassungsinformationspakets, betreffend die angepasste Identifikationsdokumentanwendung an das mobile Endgerät;
wobei die Vorlagenanwendung umfasst:
- Datenstrukturen zum Veranlassen, dass die Vorlagenanwendung mit den Beschränkungen des Anwendungsladens (1-40) übereinstimmt, wobei die Beschränkungen ein digitales Zertifikat umfassen, welches eine Integrität der Vorlagenanwendung beweist;
- eine Anfangsausführungsroutine zum Detektieren, dass die Vorlagenanwendung in dem mobilen Endgerät ausgeführt wird, ohne installierte Anpassungsinformation;
- eine Anpassungsinformationsabrufroutine, in Reaktion auf das Detektieren, dass die Vorlagenanwendung ohne installierte Anpassungsinformation ausgeführt wird, zum Abrufen der Anweisungsinformation nur von einer Seite, welche sich von dem Anwendungsladen unterscheidet, wobei die Anweisungsinformation für die angepasste Identifikationsdokumentanwendung und bestimmt für zumindest das mobile Endgerät und/oder dessen Anwender ist;
- eine Anpassungsinformationsinstallationsroutine zum Installieren der abgerufenen Anpassungsinformation; und
- Anwendungsausführungsroutinen zum Ausführen der Vorlagenanwendung in dem mobilen Endgerät mit der installierten Anpassungsinformation, obwohl das eine Integrität der Vorlagenanwendung beweisende digitale Zertifikat keine Integrität der Anpassungsinformation beweist.

2. Verfahren gemäß Anspruch 1, weiter umfassend: bei dem Anpassungsserver, Senden (3-65D) der Anweisungen zum Herunterladen der Vorlagenanwendung in einer Webanwendung.

3. Verfahren gemäß Anspruch 2, wobei die Webanwendung ebenso zumindest die Anpassungsinformation umfasst.

4. Verfahren gemäß einem der vorstehenden Ansprüche, wobei die Identifikationsinformation des mobilen Endgeräts eine Telekommunikationsnetzwerkadresse für das mobile Endgerät (beispielsweise MSISDN, E-Mail, ...) umfasst.

5. Verfahren gemäß einem der vorstehenden Ansprüche, wobei die Identifikationsinformation des mobilen Endgeräts eine in einem Cookie gespeicherte Information bei dem mobilen Endgerät umfasst.

6. Verfahren gemäß einem der vorstehenden Ansprüche, wobei die Identifikationsinformation des mobilen Endgeräts ein personalisiertes Token (3-35C) umfasst, welches für das mobile Endgerät erzeugt ist.

7. Verfahren gemäß einem der vorstehenden Ansprüche, wobei das Umleiten des mobilen Endgeräts zu einem Anwendungsladen ein Bestimmen umfasst, welcher von mehreren Anwendungsläden das mobile Endgerät unterstützt, und ein Umleiten des mobilen Endgeräts zu dem bestimmten Anwendungsladen.

8. Verfahren gemäß Anspruch 7, wobei ein Bestimmen, welcher von mehreren Anwendungsläden das mobile Endgerät unterstützt, ein Überprüfen eines durch das mobile Endgerät übertragenen Nachrichtenheaders umfasst.

9. Verfahren gemäß einem der vorstehenden Ansprüche, wobei die Beschränkungen des Anwendungsladens eine digitale Unterschrift umfassen und wobei die Anweisungsinformation die digitale Unterschrift nicht umfasst.

10. Ein Anpassungsserver (1-20, 2-100) für ein Telekommunikationsnetzwerk, wobei der Anpassungsserver umfasst:
- Mittel zum Empfangen (3-05) einer Anfrage für eine angepasste Identifikationsdokumentanwendung bei einem Anpassungsserver (1-20) und Mittel zum Speichern von Auftragsdaten betreffend die angepasste Identifikationsdokumentanwendung, wobei die Anfrage eine Identifikationsinformation für ein mobiles Endgerät (1-80) und/oder dessen Anwender enthält;
- Mittel zum Zuweisen eines Identifikationselements für die Auftragsdaten;
- Mittel zum Senden (3-20) eines Anwendungsauftragslinks an das mobile Endgerät, wobei der Anwendungsauftragslink auf den Anpassungsserver hinweist und das Identifikationselement umfasst;
- Mittel zum Empfangen einer Anfrage (3-35A, 3-35B, 3-35C, 3-35D) von dem mobilen Endgerät, wobei die Anfrage das Identifikationselement umfasst;
- Mittel für bei dem Anpassungsserver, Vorbereiten (3-50) eines Anpassungsinformation (1-30) Pakets für die angepasste Identifikationsdokumentanwendung und zumindest das mobile Endgerät und/oder dessen Anwender, wobei das Anpassungsinformationspaket das Identifikationselement umfasst;
- Mittel zum Senden von Anweisungen (3-65, 3-65D) an das mobile Endgerät zum Herunterladen einer Vorlagenanwendung für die angepasste Identifikationsdokumentanwendung von einem Anwendungsladen (1-40), wobei der Anpassungsserver und der Anwendungsladen unterschiedliche Einheiten sind und der Anwendungsladen durch einen Plattform oder Hardware-Provider des mobilen Endgeräts bereitgestellt ist und Beschränkungen an bereitgestellte Anwendungen stellt, wobei die Beschränkungen ein digitales Zertifikat umfassen, welches eine Integrität der bereitgestellten Anwendungen bereitstellt und ein Durchlaufen von Übereinstimmungsüberprüfungen durch den Plattform oder Hardware-Provider oder einer vertrauenswürdigen Einheit angibt;
- Mittel zum Empfangen (5-05) einer Initialisierungsanfrage von der durch das mobile Endgerät ausgeführten Vorlagenanwendung, wobei die Initialisierungsanfrage das Identifikationselement umfasst;
- Mittel zum Identifizieren des vorbereiteten Anpassungsinformationspakets basierend auf dem Identifikationselement;
- Mittel zum Senden (3-65, 5-30A, 5-30B) des vorbereiteten Anpassungsinformationspakets betreffend die angepasste Identifikationsdokumentanwendung an das mobile Endgerät;
wobei die Vorlagenanwendung umfasst:
- Datenstrukturen zum Veranlassen, dass die Vorlagenanwendung die Beschränkungen des Anwendungsladens erfüllt,
- eine Anfangsausführungsroutine zum Detektieren, dass die Vorlagenanwendung in dem mobilen Endgerät ausgeführt wird, ohne Installieren von Anweisungsinformation;
- eine Anpassungsinformationsabrufroutine, in Reaktion auf das Detektieren, dass die Vorlagenanwendung ohne installierte Anpassungsinformation ausgeführt wird, zum Abrufen der Anweisungsinformation nur von einer Seite, welche sich von dem Anwendungsladen unterscheidet, wobei die Anweisungsinformation für die angepasste Identifikationsdokumentanwendung und bestimmt für zumindest das mobile Endgerät und/oder dessen Anwender ist;
- eine Anpassungsinformationsinstallationsroutine zum Installieren der abgerufenen Anweisungsinformation; und
- Anwendungsausführungsroutinen zum Ausführen der Vorlagenanwendung in dem mobilen Endgerät mit der installierten Anpassungsinformation, obwohl das eine Integrität der Vorlagenanwendung beweisende digitale Zertifikat keine Integrität der Anweisungsinformation beweist.

11. Eine angepasste Identifikationsdokumentanwendung für ein mobiles Endgerät (1-80), wobei die angepasste Identifikationsdokumentanwendung eine Vorlagenanwendung (1-50) umfasst, welche nicht für ein bestimmtes mobiles Endgerät oder dessen Anwender angepasst ist, und wobei die Vorlagenanwendung zum Zustellen an eine Vielzahl von mobilen Endgeräten von einem Anwendungsladen (1-40) ausgebildet ist, wobei die Vorlagenanwendung umfasst:
- Datenstrukturen zum Veranlassen, dass die Vorlagenanwendung mit Beschränkungen des Anwendungsladens übereinstimmt, wobei die Beschränkungen ein eine Integrität der Vorlagenanwendung beweisendes digitales Zertifikat umfassen, wobei das digitale Zertifikat durch einen Plattform Provider des mobilen Endgeräts oder ein durch den Plattform-Provider vertraute Einheit bereitgestellt ist und ein Durchlaufen von Übereinstimmungsüberprüfungen durch den Plattform oder Hardware-Provider oder einer vertrauenswürdigen Einheit angibt;
- eine Anfangsausführungsroutine zum Detektieren, dass die Vorlagenanwendung in dem mobilen Endgerät ausgeführt wird, ohne Anweisungsinformation (1-30);
- eine Anpassungsinformationsabrufroutine, in Reaktion auf das Detektieren, dass die Vorlagenanwendung ohne installierte Anpassungsinformation ausgeführt wird, zum Abrufen der Anweisungsinformation nur von einer Seite, welche sich von dem Anwendungsladen unterscheidet, wobei die Anweisungsinformation für die Anpassungsidentifikationsdokumentanwendung und spezifisch für zumindest das mobile Endgerät und/oder dessen Anwender ist;
- eine Anweisungsinformation Installationsroutine zum Installieren der Anweisungsinformation;
- Anwendungsausführungsroutinen zum Ausführen der Vorlagenanwendung in dem mobilen Endgerät mit der installierten Anpassungsinformation, obwohl das eine Integrität der Vorlagenanwendung beweisende digitale Zertifikat keine Integrität der Anweisungsinformation beweist.

12. Anwendung gemäß Anspruch 11, wobei die Anwendung ein ein bestimmtes mobiles Endgerät identifizierendes Identifikationsdokument umfasst.

13. Anwendung gemäß Anspruch 11, wobei die Anwendung ein einen bestimmten Anwender eines mobilen Endgeräts identifizierendes Identifikationsdokument umfasst.

## Revendications

1. Procédé comprenant :
la fourniture d'une application de document d'identification personnalisée à un terminal mobile (1-80), dans lequel ladite fourniture comprend :
- la réception (3-05) d'une demande pour l'application de document d'identification personnalisée auprès d'un serveur de personnalisation (1-20) et le stockage de données d'ordre se rapportant à l'application de document d'identification personnalisée, dans lequel la demande contient des informations d'identification pour le terminal mobile et/ou son utilisateur ;
- dans le serveur de personnalisation, l'affectation d'un identifiant pour les données d'ordre ;
- dans le serveur de personnalisation, l'envoi (3-20) d'un lien d'ordre d'application au terminal mobile, dans lequel le lien d'ordre d'application pointe sur le serveur de personnalisation et comprend l'identifiant ;
- dans le serveur de personnalisation, la réception d'une demande (3-35A, 3-35B, 3-35C, 3-35D) du terminal mobile, la demande comprenant l'identifiant ;
- dans le serveur de personnalisation, la préparation (3-50) d'un paquet d'informations de personnalisation (1-30) pour l'application de document d'identification personnalisée et au moins l'un du terminal mobile et de son utilisateur, le paquet d'informations de personnalisation comprenant l'identifiant ;
- dans le serveur de personnalisation, l'envoi d'instructions (3-65, 3-65D) au terminal mobile pour télécharger une application modèle (1-50) pour l'application de document d'identification personnalisée d'une mémoire d'applications (1-40), dans lequel le serveur de personnalisation et la mémoire d'applications sont des entités distinctes et la mémoire d'application est fournie par un fournisseur de plateforme ou de matériel informatique du terminal mobile et impose des contraintes aux applications fournies, les contraintes comprenant un certificat numérique fournissant l'intégrité des applications fournies et indiquant le passage de contrôles de conformité par la plateforme ou le fournisseur de matériel informatique ou une entité approuvée ;
- dans le serveur de personnalisation, la réception (5-05) d'une demande d'initialisation de l'application modèle exécutée par le terminal mobile, la demande d'initialisation comprenant l'identifiant ;
- dans le serveur de personnalisation, l'identification du paquet d'informations de personnalisation préparé sur la base de l'identifiant ;
- dans le serveur de personnalisation, l'envoi (5-30A) du paquet d'informations de personnalisation préparé se rapportant à l'application de document d'identification personnalisée au terminal mobile ;
dans lequel l'application modèle comprend :
- des structures de données pour faire en sorte que l'application modèle soit conforme aux contraintes de la mémoire d'applications (1-40), dans lequel les contraintes comprennent un certificat numérique prouvant l'intégrité de l'application modèle ;
- un programme d'exécution initial pour détecter que l'application modèle est exécutée dans le terminal mobile sans informations de personnalisation installées ;
- un programme de récupération d'informations de personnalisation, à la suite de ladite détection que l'application modèle est exécutée sans informations de personnalisation installées, pour récupérer les informations de personnalisation uniquement d'un site distinct de la mémoire d'applications, dans lequel les informations de personnalisation sont destinées à l'application de document d'identification personnalisée et sont spécifiques à au moins l'un du terminal mobile et de son utilisateur ;
- un programme d'installation d'informations de personnalisation pour installer les informations de personnalisation récupérées ; et
- des programmes d'exécution d'application pour exécuter l'application modèle dans le terminal mobile avec les informations de personnalisation installées, bien que le certificat numérique prouvant l'intégrité de l'application modèle ne prouve pas l'intégrité des informations de personnalisation.

2. Procédé selon la revendication 1, comprenant en outre dans le serveur de personnalisation l'envoi (3-65D) d'instructions pour télécharger l'application modèle dans une application web.

3. Procédé selon la revendication 2, dans lequel l'application web comprend également au moins une partie des informations de personnalisation.

4. Procédé selon l'une quelconque des revendications précédentes, dans lequel les informations d'identification de mosaïques du terminal mobile comprennent une adresse de réseau de télécommunications pour le terminal mobile (par exemple MSISDN, e-mail...) .

5. Procédé selon l'une quelconque des revendications précédentes, dans lequel les informations d'identification du terminal mobile comprennent des informations stockées dans un cookie du terminal mobile.

6. Procédé selon l'une quelconque des revendications précédentes, dans lequel les informations d'identification du terminal mobile comprennent un jeton personnalisé (3-35C) créé pour le terminal mobile.

7. Procédé selon l'une quelconque des revendications précédentes, dans lequel ladite redirection du terminal mobile vers une mémoire d'applications comprend la détermination de celle de multiples mémoires d'applications qui supporte le terminal mobile et la redirection du terminal mobile vers la mémoire d'applications déterminée.

8. Procédé selon la revendication 7, dans lequel la détermination de celle de multiples mémoires d'applications qui supporte le terminal mobile comprend l'examen d'un en-tête de message transmis par le terminal mobile.

9. Procédé selon l'une quelconque des revendications précédentes, dans lequel les contraintes de la mémoire d'applications comprennent une signature numérique et dans lequel les informations de personnalisation ne comprennent pas la signature numérique.

10. Serveur de personnalisation (1-20, 2-100) pour un réseau de télécommunications, le serveur de personnalisation comprenant :
- des moyens pour recevoir (3-05) une demande pour une application de document d'identification personnalisée dans un serveur de personnalisation (1-20) et des moyens pour stocker des données d'ordre se rapportant à l'application de document d'identification personnalisée, dans lequel la demande contient des informations d'identification pour un terminal mobile (1-80) et/ou son utilisateur ;
- des moyens pour affecter un identifiant pour les données d'ordre ;
- des moyens pour envoyer (3-20) un lien d'ordre d'application au terminal mobile, dans lequel le lien d'ordre d'application pointe sur le serveur de personnalisation et comprend l'identifiant ;
- des moyens pour recevoir une demande (3-35A, 3-35B, 3-35C, 3-35D) du terminal mobile, la demande comprenant l'identifiant ;
- des moyens pour préparer (3-50) dans le serveur de personnalisation un paquet d'informations de personnalisation (1-30) pour l'application de document d'identification personnalisée et au moins l'un du terminal mobile et de son utilisateur, le paquet d'informations de personnalisation comprenant l'identifiant ;
- des moyens pour envoyer des instructions (3-65, 3-65D) au terminal mobile pour télécharger une application modèle pour l'application de document d'identification personnalisée d'une mémoire d'applications (1-40), dans lequel le serveur de personnalisation et la mémoire d'applications sont des entités distinctes et la mémoire d'application est fournie par un fournisseur de plateforme ou de matériel informatique du terminal mobile et impose des contraintes aux applications fournies, les contraintes comprenant un certificat numérique fournissant l'intégrité des applications fournies et indiquant le passage de contrôles de conformité par la plateforme ou le fournisseur de matériel informatique ou une entité approuvée ;
- des moyens pour recevoir (5-05) une demande d'initialisation de l'application modèle exécutée par le terminal mobile, la demande d'initialisation comprenant l'identifiant ;
- des moyens pour identifier le paquet d'informations de personnalisation préparé sur la base de l'identifiant ;
- des moyens pour envoyer (5-65, 5-30A, 5-30B) le paquet d'informations de personnalisation préparé se rapportant à l'application de document d'identification personnalisée au terminal mobile ;
dans lequel l'application modèle comprend :
- des structures de données pour faire en sorte que l'application modèle soit conforme aux contraintes de la mémoire d'applications,
- un programme d'exécution initial pour détecter que l'application modèle est exécutée dans le terminal mobile sans informations de personnalisation installées ;
- un programme de récupération d'informations de personnalisation, à la suite de ladite détection que l'application modèle est exécutée sans informations de personnalisation installées, pour récupérer les informations de personnalisation uniquement d'un site distinct de la mémoire d'applications, dans lequel les informations de personnalisation sont destinées à l'application de document d'identification personnalisée et sont spécifiques à au moins l'un du terminal mobile et de son utilisateur ;
- un programme d'installation d'informations de personnalisation pour installer les informations de personnalisation récupérées ; et
- des programmes d'exécution d'application pour exécuter l'application modèle dans le terminal mobile avec les informations de personnalisation installées, bien que le certificat numérique prouvant l'intégrité de l'application modèle ne prouve pas l'intégrité des informations de personnalisation.

11. Application de document d'identification personnalisée pour un terminal mobile (1-80), dans laquelle l'application de document d'identification personnalisée comprend une application modèle (1-50) qui n'est pas personnalisée pour un terminal mobile particulier quelconque ou son utilisateur et dans laquelle l'application modèle est configurée pour la fourniture à une pluralité de terminaux mobiles à partir d'une mémoire d'applications (1-40), dans laquelle l'application modèle comprend :
- des structures de données pour faire en sorte que l'application modèle soit conforme aux contraintes de la mémoire d'applications, dans laquelle les contraintes comprennent un certificat numérique prouvant l'intégrité de l'application modèle, dans laquelle le certificat numérique est fourni par un fournisseur de plateforme du terminal mobile ou une entité approuvée par le fournisseur de plateforme et indique le passage de contrôles de conformité par la plateforme ou le matériel informatique fourni ou une entité approuvée ;
- un programme d'exécution initial pour détecter que l'application modèle est exécutée dans le terminal mobile sans informations de personnalisation (1-30) ;
- un programme de récupération d'informations de personnalisation, à la suite de ladite détection que l'application modèle est exécutée sans informations de personnalisation installées, pour récupérer les informations de personnalisation uniquement d'un site distinct de la mémoire d'applications, dans lequel les informations de personnalisation sont destinées à l'application de document d'identification personnalisée et sont spécifiques à au moins l'un du terminal mobile et de son utilisateur ;
- un programme d'installation d'informations de personnalisation pour installer les informations de personnalisation ; et
- des programmes d'exécution d'application pour exécuter l'application modèle dans le terminal mobile avec les informations de personnalisation installées, bien que le certificat numérique prouvant l'intégrité de l'application modèle ne prouve pas l'intégrité des informations de personnalisation.

12. Application selon la revendication 11, dans laquelle l'application comprend un document d'identification identifiant un terminal mobile spécifique.

13. Application selon la revendication 11, dans laquelle l'application comprend un document d'identification identifiant un utilisateur spécifique d'un terminal mobile.
